## Europäisches Patentamt

(19) **European Patent Office**

**Office européen des brevets**

(11) Publication number:

**0 054 419**
**B1**

(12) **EUROPEAN PATENT SPECIFICATION**

(45) Date of publication of patent specification: **10.10.84**

(21) Application number: **81305848.4**

(22) Date of filing: **11.12.81**

(51) Int. Cl.³: **G 11 B 5/52**

(54) Tracking control arrangement in a magnetic recording and reproducing device.

| | |
|---|---|
| (30) Priority: **13.12.80 JP 176411/80** | (73) Proprietor: **SONY CORPORATION**<br>**7-35 Kitashinagawa 6-Chome Shinagawa-ku**<br>**Tokyo 141 (JP)** |
| (43) Date of publication of application:<br>**23.06.82 Bulletin 82/25** | (72) Inventor: **Moriya, Ryusuke**<br>**467-3 Ojiri** |
| (45) Publication of the grant of the patent:<br>**10.10.84 Bulletin 84/41** | **Hadano-shi Kanagawa-ken (JP)**<br>Inventor: **Eguchi, Takeo**<br>**618-41 Minamiyana**<br>**Hadano-shi Kanagawa-ken (JP)** |
| (84) Designated Contracting States:<br>**AT DE FR GB NL** | Inventor: **Ohba, Takeo**<br>**7-19-3 Kamitsuruma**<br>**Sagamihara-shi Kanagawa-ken (JP)** |
| (56) References cited:<br>**GB-A-2 005 458**<br>**GB-A-2 064 830** | (74) Representative: **Thomas, Christopher Hugo**<br>**et al** |
| **Patent Abstracts of Japan Vol. 4, NO. 100, 18**<br>**July 1980** | **D Young & Co 10 Staple Inn**<br>**London WC1V 7RD (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a tracking control arrangement in a magnetic recording and reproducing device.

In a magnetic recording and reproducing device such as a video tape recorder (VTR), the quality of the reproduced signal is deteriorated by positional deviation (hereinafter referred to a tracking error) between the recording track on a magnetic recording medium traced by a recording magnetic head at the time of the recording, and the track on the magnetic recording medium traced by a reproducing magnetic head at the time of reproduction. Therefore, it is necessary to provide a tracking control to eliminate this tracking error. For example, with a VTR for recording and reproducing video signals using a rotary magnetic head assembly, the tracking control has been done by providing servo control of a capstan motor, which normally causes constant speed running of a magnetic tape forming the magnetic recording medium, in dependence on a tracking error. Alternatively, auto-tracking control has been effected by a so-called wobbling or dithering method, in which the position of the reproduced magnetic head is controlled so as to make the envelope of the reproduced signal a maximum, while providing slight vibrations to the reproducing magnetic head. See, for example, US patent 4 151 570.

In the prior capstan servo tracking control method, however, accurate response cannot be obtained from the start through to the end of the scanning of a recording track. Therefore, this method has been imperfect when used as the tracking control for narrow recording tracks. Moreover, although the tracking control by the wobbling method permits an increased response speed to be obtained, deterioration of the overall signal-to-noise (S/N) ratio is inevitable, because the effective envelope level of the reproduced signal is reduced to about 90% by wobbling.

Accordingly, we have already proposed in our European patent application EP—A—40 066 simultaneous recording and simultaneous reproduction with different azimuth angles set for two-channel recording tracks on a magnetic recording medium, and effecting tracking control through the detection of a tracking error due to the phase difference between the reproduced signals for the individual channels obtained at the time of playback, thus permitting steady and accurate tracking control without deterioration of the S/N ratio, and also with high response speed.

According to the present invention there is provided a tracking control arrangement in a magnetic recording and reproducing device of the type effecting simultaneous recording and then simultaneous reproduction of at least four channel recording tracks formed on a magnetic recording medium, as claimed in claim 1.

The invention will now be described by way of example with reference to the accompanying drawings, in which:

Figure 1 is a schematic plan view showing a rotary magnetic head assembly used in an embodiment of tracking control arrangement according to the invention;

Figures 2 and 3 show an example of the arrangement of magnetic heads in a rotary magnetic head assembly in the embodiment, Figure 2 being a perspective view and Figure 3 being a front view;

Figure 4 is a schematic plan view of a magnetic recording track pattern obtained with the embodiment;

Figure 5 is a block diagram of a recording system of a digital VTR provided with the rotary magnetic head assembly of Figure 1, but not incorporating the invention;

Figure 6 is a waveform diagram illustrating the sampling and the distribution of a video signal in the digital VTR of Figure 5;

Figure 7 is a data format view illustrating the error correction of sampled data in the digital VTR of Figure 5;

Figure 8 is a block diagram of a reproducing system in the digital VTR of Figure 5, again not incorporating the invention;

Figure 9 is a view illustrating the principles of tracking error detection in the digital VTR of Figure 5;

Figure 10 is a block diagram of a tracking control circuit in the digital VTR of Figure 5;

Figure 11 is a waveform chart of signals for illustrating the operation of the tracking control circuit of Figure 10;

Figure 12 is a block diagram of the recording system in the digital VTR of Figure 5, modified to incorporate the invention.

Figure 13 is a waveform chart of signals for illustrating the operation of a tracking control circuit which may be used in the invention, when two magnetic heads trace recording tracks not corresponding to them;

Figure 14 is a block diagram of another tracking control circuit which may be used in the invention;

Figures 15 and 16 are waveform diagrams for illustrating the operation of the tracking control circuit of Figure 14; and

Figure 17 is a block diagram of part of the tracking control circuit of Figure 14.

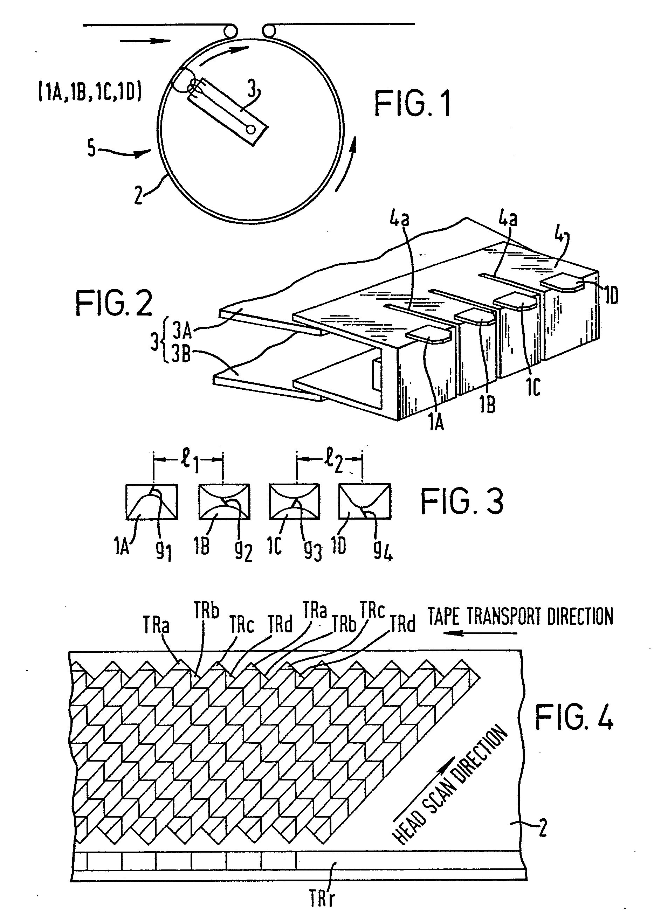

A recording and reproducing system, in which a colour video signal obtained from a television camera is digitally converted into two-channel signals for recording on and reproduction from two tracks, has been previously proposed. However, the recording of a digitized colour video signal in two channels still requires a high bit rate in the recording signal, and a great quantity of magnetic tape is consumed. To overcome this problem, a so-called digital VTR is necessary, this being a magnetic recording and reproducing device in which the digital signal is recorded by distributing it to a plurality of, for example, at least four, channels for multi-track recording by magnetic heads corresponding in number to the number of channels, thereby reducing the bit rate of the recording signal. Figure 1 shows diagrammatically part of a digital VTR forming part of an embodiment of the invention and provided with a rotary magnetic head assembly 5 rotated, for example, at the field frequency of the NTSC colour video signal, and the NTSC colour video signal is recorded and reproduced by the rotary magnetic head assembly 5 using a magnetic recording tape 2 as the magnetic recording medium.

As shown in Figure 2, the rotary magnetic head assembly 5 has four magnetic heads 1A, 1B, 1C and 1D installed in a row on one side of a mounting block 4 having a channel-shaped sectional profile and mounted on the end of a head support 3. The head support 3 comprises two bimorph plates 3a and 3B mounted on a support base and extending parallel to each other. The mounting block 4 is provided with slits 4a formed to divide portions where the magnetic heads 1A, 1B, 1C and 1D are mounted, to permit height adjustment of the magnetic heads 1A, 1B, 1C and 1D. The rotary magnetic head assembly 5 having the four magnetic heads 1A, 1B, 1C and 1D mounted at the end of the head support 3, is rotated by a rotational force applied to a rear portion of the head support 3 from a drive motor (not shown), as schematically shown in Figure 1, whereby the magnetic heads 1A, 1B, 1C and 1D are rotated at a constant speed at the field frequency. The magnetic tape 2 is wound around substantially 360° of the peripheral wall of the rotary magnetic head assembly 5 at an angle and is driven at a predetermined speed in frictional contact with the magnetic heads 1A, 1B, 1C and 1D.

The bimorph plates 3 in the rotary magnetic head assembly 5 are supplied with a control voltage from the tracking control circuit 50, and the height position of each individual magnetic head 1A, 1B, 1C and 1D is controlled according to the control voltage. The individual magnetic heads 1A, 1B, 1C and 1D have respective magnetic gaps $g_1$, $g_2$, $g_3$ and $g_4$ formed such that adjacent gaps have different azimuth angles, and are disposed in the vicinity of one another, as shown in Figure 3. In the arrangement of Figure 3, the magnetic gaps $g_1$ and $g_2$ of the first and third magnetic heads 1A and 1C have the same azimuth angle, and the magnetic gaps $g_2$ and $g_4$ of the second and fourth magnetic heads 1B and 1D have the same azimuth angle. The magnetic heads 1A, 1C and 1B, 1D are alternately arranged so that the magnetic gaps $g_1$ and $g_2$ of the adjacent magnetic heads 1A and 1B and the gaps $g_3$ and $g_4$ of the heads 1C and 1D have different azimuth angles.

On the magnetic tape 2 that is transported in frictional contact with the magnetic heads 1A, 1B, 1C and 1D in the rotary magnetic head assembly 5, four parallel recording tracks TRa, TRb, TRc and TRd are formed contiguous with one another and at a predetermined inclination angle for each field, as shown in Figure 4. Thus video signals are azimuth recorded in four channels of the respective recording tracks TRa, TRb, TRc and TRd by the magnetic heads 1A, 1B, 1C and 1D of the different azimuth angles. A control track TRr is also provided.

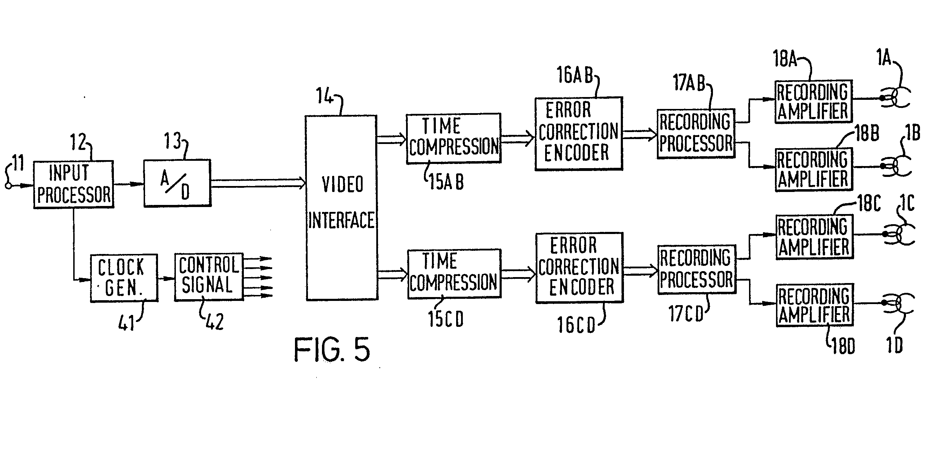

This VTR includes a recording system as shown in the block diagram of Figure 5. An NTSC colour video signal, for example, is converted into a digital signal, while data representing one horizontal line is distributed into four channels as will be described hereinafter. The four channel digital signals are recorded as four recording tracks TRa, TRb, TRc and TRd for each field by the four in-line rotary magnetic heads 1A, 1B, 1C and 1D as shown in Figure 4.

In this case, a portion of one horizontal line of the colour video signal but excluding the horizontal sync pulse HD and the burst signal BS, is sampled and digitized as the effective video region. For one field of colour video signal, the vertical sync pulse and other pulses are not regarded as effective data, and the signal during these periods is not recorded. However, since the vertical retrace period includes test signals such as VTR and VIT, the effective video line number is determined by including these lines. For example, in the case of an NTSC colour video signal, the effective video lines for one field period are 256 in number starting from the tenth line in each field.

In this example, the sampling frequency $f_{vs}$ when digitizing the colour video signal is four times the colour sub-carrier frequency $f_{sc}$.

In Figure 5, a colour video signal fed to an input terminal 11 is supplied to an input processor 12, in which the sync pulse HD and the burst signal BS are removed.

The separated sync pulse HD and the burst signal BS are supplied to a master clock generating circuit 41 to generate a clock pulse signal synchronized to the burst signal BS and at, for example, four times the frequency $f_{sc}$. This clock pulse signal and also the sync pulse are supplied to a control signal generating circuit 42 to form identification signals for the line, field, frame and track, sampling pulse and various timing signals. These signals are supplied to their respective circuits.

The colour video signal with the sync pulse and the burst signal removed therefrom in the input processor 12 is supplied to an analog-to-digital (A/D) converter 13, and the above-mentioned effective data portion of the colour video signal is sampled in dependence on the sampling pulses and A/D converted into, for example, an 8-bit parallel digital signal for each sample.

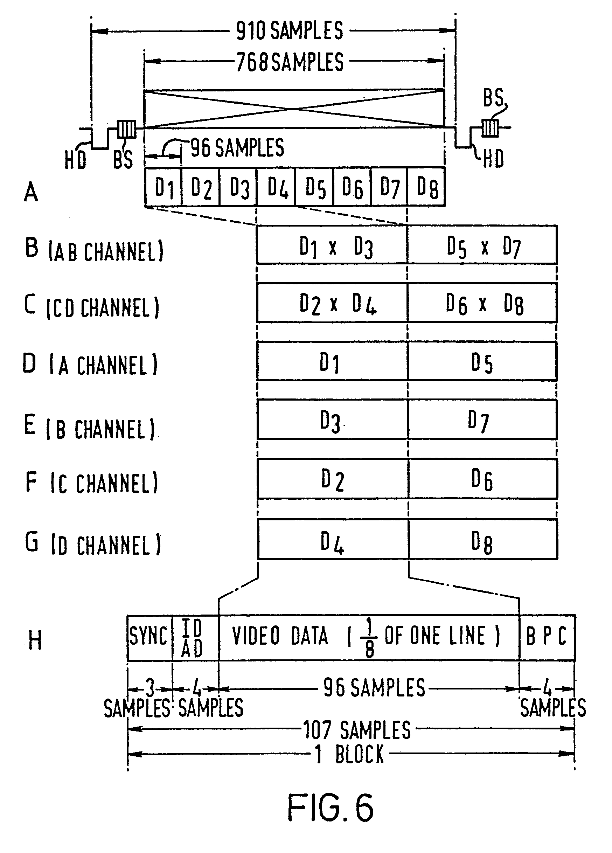

The sampling frequency is $4f_{sc}$, and since $f_{sc}=455f_H/2$, where $f_H$ is the horizontal scanning frequency, in the case of an NTSC colour video signal, 910 samples are contained in one horizontal scanning period. However, since the sampling is not required during the horizontal blanking period as mentioned before, the number of effective video samples in one line is less, for example 768 samples, as shown in Figure 6.

The digital colour video signal obtained in this way, is supplied to a video interface 14 and subjected to pre-treatment before distribution of the digital video signal data into a plurality of channels.

More particularly, the digital video signal is diutributed into four channels for recording. In this example, data of one line is divided into first and second half-line data, and these first and second half-line data are individually divided into four portions, that is, the signal is divided into eight data $D_1$, $D_2$, ..., $D_8$ each of 96 samples. The first four half-line data $D_1$, $D_2$, $D_3$ and $D_4$ are distributed to respective channel tracks A, B, C and D, and also the second four half-line data $D_5$, $D_6$, $D_7$ and $D_8$ are distributed to respective channel tracks A, B, C and D. More particularly, the data $D_1$ and $D_5$ are recorded in the A channel track $T_A$, the data $D_3$ and $D_7$ are recorded in the B channel track $T_B$, the data $D_2$ and $D_6$ are recorded in the C channel track $T_C$, and the data $D_4$ and $D_8$ are recorded in the D channel track $T_D$.

Where the four channel data are each processed independently, four signal processing systems are required, leading to a complicated construction and high cost. Accordingly, the data are processed on a time division basis through two systems, that is, as AB channel system for the A and B channels and a CD channel system for the C and D channels.

With this arrangement, the data rate in the video interface 14 is reduced by one-half. As shown in Figure 6B, in the AB channel system the data $D_1$ and $D_3$ are multiplexed, that is, processed on a time division basis such that the samples of data $D_1$ and the samples of data $D_3$ occur alternately, and then the data $D_5$ and $D_7$ are multiplexed on a time division basis such that the samples of data $D_5$ and the samples of data $D_7$ occur alternately. In the CD channel system, as shown in Figure 6C, the samples of the data $D_2$ and those of the data $D_4$ are time division multiplexed, and then the samples of data $D_6$ and those of data $D_8$ are time division multiplexed.

The AB channel and CD channel system digital signals obtained from the video interface 14 are supplied to respective time axis compression circuits 15AB and 15CD for time axis compression with a predetermined ratio, for increasing the quantity of total information, accompanying the addition of error correction codes and the conversion of data formats.

The digital signals from the time axis compression circuits 15AB and 15CD are supplied through respective error correction encoders 16AB and 16CD and recording processors 17AB and 17CD. In the error correction encoders 16AB and 16CD and the recording processors 17AB and 17CD, the multiplexed data for each sample is processed on a time division basis for each sample. More particularly, samples in each of the individual data $D_1$, $D_2$, ..., $D_8$ are processed independently while the data rate is reduced to one-half (or one-quarter with respect to the initial sample data). That is, the signal is processed for each of the A, B, C and D channels as shown in Figures 6D, 6E, 6F and 6G.

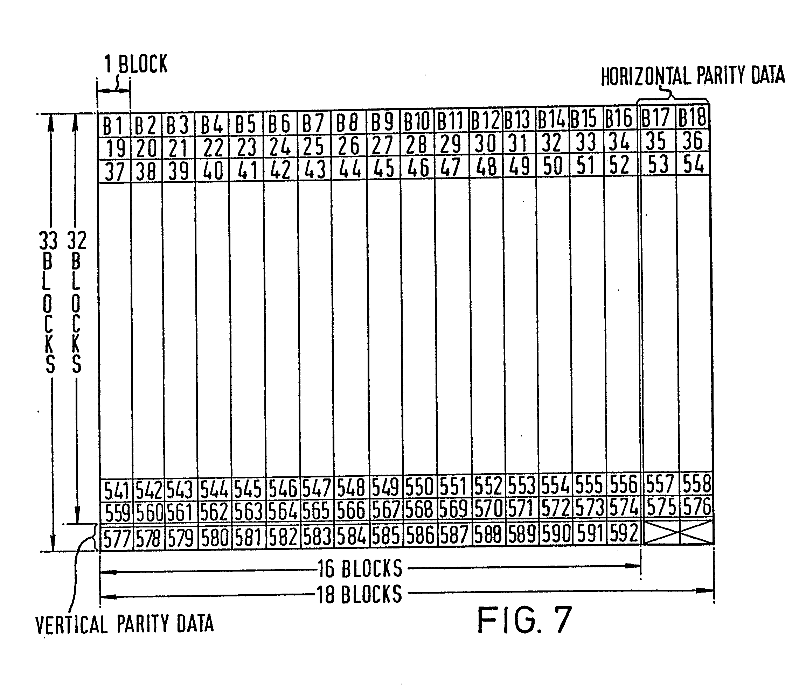

By the time division processing of data in the error correction encoders 16AB and 16CD and the recording processors 17AB and 17CD it is converted into a signal in a format as shown in Figures 6H and 7.

In this example, a block B is formed for each of the one-eighth line video signal data $D_1$, $D_2$, ..., $D_8$ (of 96 samples). As shown in Figure 6H, a block sync signal SYNC corresponding to a portion of three samples (24 bits) and an identification signal ID and an address signal AD corresponding to a portion of four samples (32 bits) are inserted before the video data, and a block parity data BPC corresponding to a portion of four samples (32 bits) is inserted after the video data.

The sync signal SYNC is used for the purpose of, for example, synchronization when extracting the signals ID and AD, data, and block parity data BPC at the time of playback.

The identification signal ID identifies either A, B, C or D channel (or track) and either odd or even frame or field. The address signal AD shows the address of the block B in the video signal in one field in each channel. The block parity data BPC is provided for detecting errors of data at the time of the playback and also for correcting data in the block B.

The data of one field for each channel has a configuration as described below.

Figure 7 shows the data configuration of one field video signal data for one channel.

In this example, the numeral added to each block B corresponds to the address signal AD mentioned above.

In an NTSC system colour video signal, one field consists of 512 blocks for each channel if the effective video line number is set to 256 as mentioned above. In the matrix form arrangement shown in Figure 7, in addition to 16 blocks in the horizontal direction and 32 blocks in the vertical direction, that is, a matrix of $16 \times 32$ blocs, 17th and 18th blocks are added as parity data in the horizontal direction (that is, in the row direction), and a 33rd block is added as parity data in the vertical direction (that is, in the column direction), that is, the matrix consists of a total of 18 by 33 blocks.

In this case, denoting the blocks B by $B_1$ to $B_{592}$, for the first row every other block in the horizontal direction are modulo-2-added:

$$B_1 \oplus B_3 \oplus \ldots \oplus B_{15} = B_{17}$$

and

$$B_2 \oplus B_4 \oplus \ldots \oplus B_{16} = B_{18}$$

to form the horizontal parity data $B_{17}$ and $B_{18}$ for the first row. Likewise, for the 2nd to 32nd rows, the horizontal parity data are formed.

Also, for the first column the blocks in the vertical direction are modulo-2 added:

$$B_1 \oplus B_{19} \oplus B_{37} \oplus \ldots \oplus B_{559} = B_{577}$$

to form the vertical parity data $B_{577}$ for the first column. Likewise, the parity data for the 2nd to 16th columns are formed.

These horizontal and vertical parity data and block parity data BPC are used for improving the error correction capacity of the data at the time of the playback.

The signal processing of blocks to form the horizontal and vertical parity data and adding these data to the video data, is carried out in the error correction encoders 16AB and 16CD. The signal processing for forming the sync signal SYNC, the identification signal ID and the address signal AD and adding these data to the video data, is carried out in the recording processors 17AB and 17CD.

In the recording processors 17AB and 17CD, block encoding for converting the bit number of one sample from 8 bits to 10 bits is also effected. In this block encoding, of $2^{10}$ 10-bit codes, $2^8$ codes where the direct current level (DSV) is 0 or nearly 0 are selected, and the initial 8-bit codes are converted to 10-bit codes by establishing one-to-one correspondence between them and the selected 10-bit codes. In other words, the conversion is effected such that the DSV of the recording signal is as close to 0 as possible, that is, "0"s and "1"s appear substantially uniformly.

This block encoding is done because at the time of the playback a direct current component cannot be reproduced with an ordinary magnetic head.

The 10-bit unit digital signal obtained through the block encoding described above is further subjected in the recording processors 17AB and 17CD to parallel-to-serial signal conversion progressively from the block $B_1$. Moreover a preamble and a postamble signal are added respectively before and after the digital signal of one field period for each channel.

The serial digital signals are obtained separately for each channel from the recording processors 17AB and 17CD, and are supplied through recording amplifiers 18A and 18B, 18C and 18D to the respective magnetic heads 1A, 1B, 1C and 1D.

As mentioned before in connection with Figure 4, the video signal is recorded in a total of four oblique tracks TRa, TRb, TRc and TRd one for each field, with the A channel digital signal recorded by the first magnetic head 1A, the B channel digital signal by the second magnetic head 1B, the C channel digital signal by the third magnetic head 1C, and the D channel digital signal by the fourth magnetic head 1D.

In this embodiment, the track width and the pitch of the magnetic heads 1A, 1B, 1C and 1D are selected such that the set of tracks TRa, TRb, TRc and TRd corresponds to a single SMPTE "C" format video track.

In the above way, the colour video signal can be digitally recorded.

Now, the reproduction of the recorded digital signal will be described.

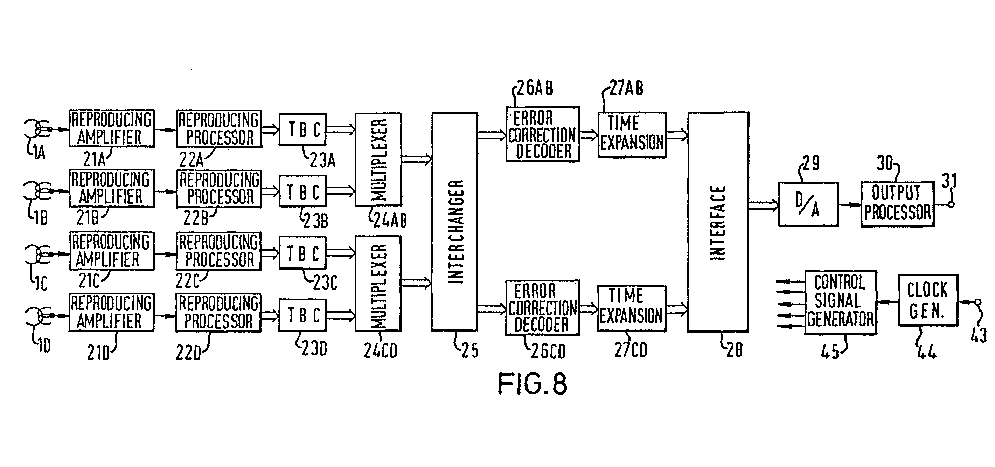

As shown in Figure 8, the individual channel digital video signals that are reproduced from the recording tracks TRa, TRb, TRc and TRd by the magnetic heads 1A, 1B, 1C and 1D, are supplied through reproducing amplifiers 21A, 21B, 21C and 21D and reproducing processors 22A, 22B, 22C and 22D for serial-to-parallel conversion, and also for block decoding from the 10-bit codes into the initial 8-bit codes. A clock signal is formed from the reproduced digital signal by a phase-locked loop circuit.

The parallel 8-bit digital signals are supplied to time base correctors (TBCs) 23A, 23B, 23C and 23D for removal of time axis variations. The TBCs 23A, 23B, 23C and 23D have memories, which are used for the heading of the signal following the block sync signal SYNC. Also, writing in the memories is effected under the control of a clock signal supplied from the reproducing processors 22A, 22B, 22C and 22D, and reading from the memories is effected under the control of a clock signal formed by a local synchronizer, whereby the time axis variations are removed.

The signals from the TBCs 23A and 23B are supplied to a multiplexer 24AB, while the signals from the TBCs 23C and 23D are supplied to a multiplexer 24CD. In the multiplexer 24AB, the A and B channel digital signals are alternately processed for each sample on a time division basis to obtain an AB channel sample sequence. In the multiplexer 24CD, the C and D channel digital signals are alternately processed for each sample on a time division basis to obtain a CD channel sample sequence. These sample sequences are rated down to one-half with respect to the initial data rate. Thus, the samples appear sequentially at one sample for every two clock pulses.

The digital signals from the multiplexers 24AB and 24CD are supplied through an interchanger 25 to error correction decoders 26AB and 26CD.

In the interchanger 25, channel discrimination is effected according to the track identification signal in the identification signal added to each block, and the block data is distributed to the appropriate channels. The processing in the interchanger 25 is of course carried out on a time division basis.

The interchanger 25 is useful particularly in modes other than the normal playback mode.

The error correction decoders 26AB and 26CD each have a field memory capable of storing for one channel the data for one field. The A and B channel data, and the C and D channel data are processed on a time division basis in the respective error correction decoders 26AB and 26CD. More particularly, data is written in the field memory according to the address AD for each block, and the data error correction is effected according to the block parity data and the horizontal and vertical parity data.

The error correction is effected first by error correction in each block according to the block parity data, then correction according to the horizontal parity data, and finally correction by the vertical parity data.

The corrected data are supplied to time axis expansion circuits 27AB and 27CD for time axis expansion back to the initial time axis on a time division basis for each channel, and also for conversion to the initial data signal format.

The video signal data from the time axis expansion circuit 27AB and 27CD are supplied to an interface 28 to obtain the initial single channel digital signal.

The one-channel digital signal thus recovered is supplied to a digital-to-analog (D/A) converter 29 for conversion to an analog colour video signal, which is supplied to an output processor 30 which reinserts the sync pulse and burst signal to obtain the initial colour video signal which is supplied from an output terminal 31.

An external reference signal is supplied from an input terminal 43 to a master clock generator 44, and a reference clock pulse signal and reference sync signal generated from the master clock generator 44 are supplied to a control signal generator 45. The control signal generator 45 generates control signals such as various timing signals synchronized to the external reference signal and identification signals regarding the line, field and frame.

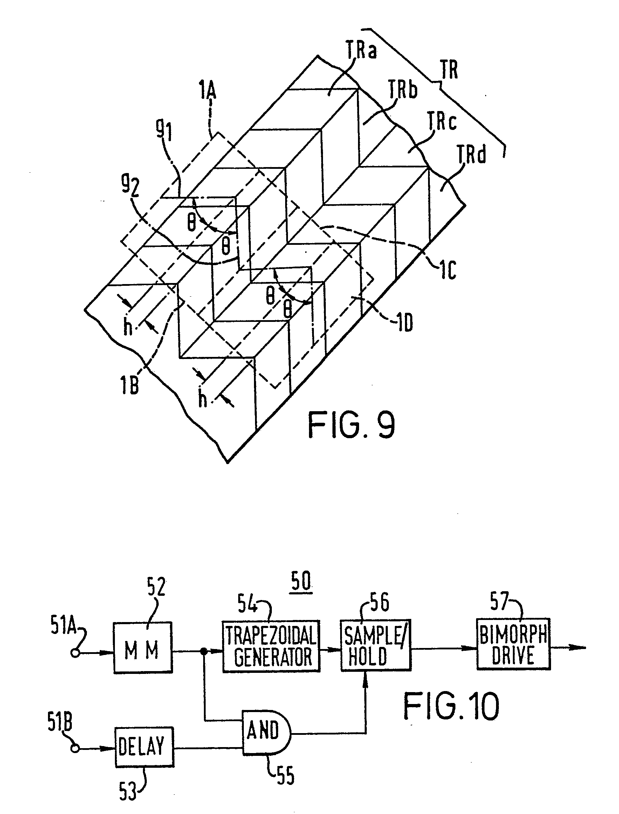

In the digital VTR provided with recording and reproducing systems as described above, in which the four channel digital signals are simultaneously recorded and simultaneously reproduced by the rotary magnetic head assembly 5 having the magnetic heads 1A, 1B, 1C and 1D such that adjacent heads have different azimuth angles, if a tracking error is present in the tracks traced by the magnetic heads 1A, 1B, 1C and 1D at the time of playback, a phase difference is produced in the reproduced four channel digital signals. For example, if a tracking error of h in the direction normal to the recording tracks TR of the magnetic tape 2 is produced by the magnetic heads 1A, 1B, 1C and 1D with the azimuth angles $\theta$ of adjacent heads opposite to each other, as shown in Figure 9, of the signals reproduced by the first and second magnetic heads 1A and 1B adjacent to each other and also of the signals reproduced by the third and fourth magnetic heads 1C and 1D, then one leads the other and lags behind the proper phase by an amount d given as:

$$d = h \tan \theta$$

that is, a phase difference of 2d given as:

$$2d = 2h \tan \theta$$

is caused. If the azimuth angle $\theta$ is 7° and the tracking error is $-h=10$ microns

$$2d = 20 \tan 7° = 2.46 \text{ microns.}$$

That is, with a tracking error of 10 microns, a phase deviation of 2.46 microns is caused. If the recording is made with 50 mbps (megabits per second)/track, the intertrack deviation corresponds to about five clock pulses since one wavelength is about 1 micron (while it is 0.5 micron in the case of a 50 MHz clock).

Thus, the block sync signals SYNC, which are present in the recorded digital signal for each channel at an interval dividing one horizontal scanning period into two or three divisions, are utilized to detect the phase difference between the block sync signals SYNC for the individual channels so as to detect the tracking error for the tracking control.

With the digital VTR, as mentioned before, in which the digital signal is distributed to four channels for multi-track recording with the same number of magnetic heads 1A, 1B, 1C and 1D, two adjacent tracks of different azimuth angles of the four channel recording tracks TRa, TRb, TRc and TRd formed on the magnetic tape 2 may be suitably selected, and the block sync signals SYNC that are contained in these recording tracks may be used to detect the phase difference of these sync signals SYNC for the individual channels so as to detect a tracking error for the tracking control. By so doing, tracking control of the non-selected channel tracks may be obtained.

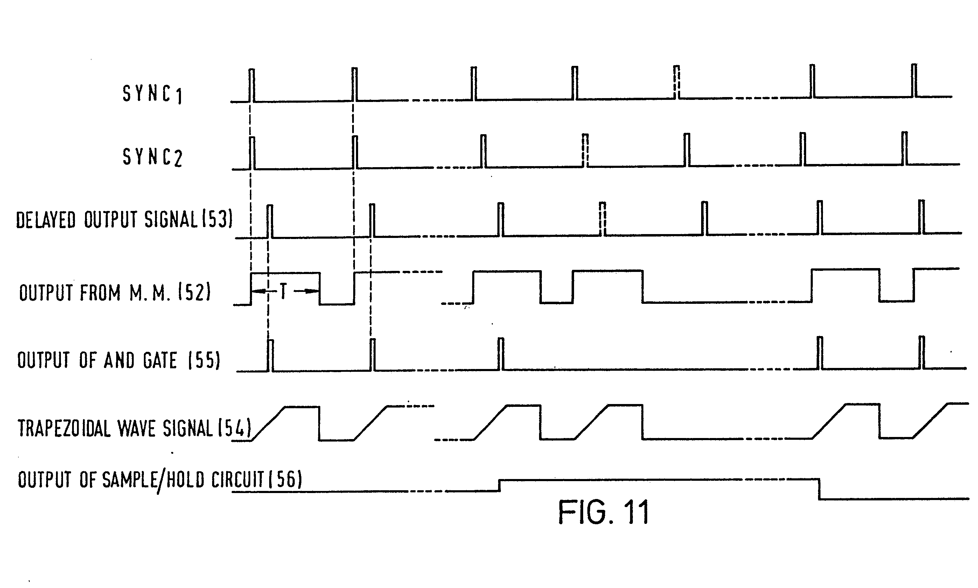

For such tracking control, a tracking control circuit 50 as shown in Figure 10 may be constructed. Block sync signals SYNC from the reproducing processors 22A and 22B of the reproducing processors 22A, 22B, 22C and 22D that correspond to the first and second magnetic heads 1A and 1B adjacent to each other and having different azimuth angles, are fed to respective input terminals 51A and 51B of the tracking control circuit 50. The block sync signals SYNC fed to the input terminals 51A and 51B are supplied to a monostable multivibrator 52 and to a delay circuit 53 respectively. The monostable multivibrator 52 is triggered by the leading edge of the block sync signal SYNC to form a pulse signal of a predetermined duration T. This pulse signal is supplied to a trapezoidal wave generator 54 and also to an AND gate 55. The AND gate 55 is gate controlled by the pulse signal from the monostable multivibrator 52 to pass the block sync signal SYNC through the delay circuit 53 to a sample/hold circuit 56. The trapezoidal wave generator 54 forms a trapezoidal signal rising in synchronism to the leading edge of the pulse signal from the monostable multivibrator 52. This trapezoidal signal is supplied to the sample/hold circuit 56. The sample/hold circuit 56 samples and holds the leading edge ramp voltage of the trapezoidal signal according to the output signal from the AND gate 55 and supplies the hold voltage $V_h$ which corresponds to the phase difference between the block sync signals $SYNC_1$ and $SYNC_2$ to a bimorph drive circuit 57. Since the phase comparison in the sample/hold circuit 56 is effected in synchronism with the output signal from the AND gate 55, the sample/hold circuit 56 is arranged such that if a drop-out is present in a signal in the aforementioned recording and reproducing systems the hold voltage $V_h$ based upon the immediately previous phase comparison is held again with respect to each dropped-out block sync signal as shown by a dashed line in Figure 11. With the driving of the bimorph drive circuit 57 according to the hold voltage $V_h$ obtained from the sample/hold circuit 56, the head support 3 comprising the two bimorph plates 3a and 3B carrying the magnetic heads 1A, 1B, 1C and 1D, is operated such as to displace the magnetic heads 1A and 1B for eliminating the tracking error. Figure 11 shows waveforms of the various signals mentioned above.

The rotary magnetic head assembly 5, which includes the four magnetic heads 1A, 1B, 1C and 1D having the magnetic gaps $g_1$, $g_2$, $g_3$ and $g_4$ such that adjacent heads have different azimuth angles, may be constructed such that the magnetic gaps $g_1$ and $g_3$ of the first and third magnetic heads 1A and 1C have the same azimuth angle and that the magnetic gaps $g_2$ and $g_4$ of the second and fourth magnetic heads 1B and 1D have the same azimuth angle as mentioned earlier. This construction has merits in manufacture such as readiness of the adjustment of the magnetic gaps $g_1$, $g_2$, $g_3$ and $g_4$ of the individual magnetic heads 1A, 1B, 1C and 1D.

With the rotary magnetic head assembly 5 of the above construction, where the first and third magnetic heads 1A and 1C have the same azimuth angle and the second and fourth magnetic heads 1B and 1D have the same azimuth angle, reproduced outputs can be obtained from the magnetic heads 1A and 1B even in the case when the first magnetic head 1A traces the recording track TRc formed by the third magnetic head 1C and the second magnetic head 1B traces the recording track TRd formed by the fourth magnetic head 1D. That is, another stable tracing condition is obtained at the time of playback, where the recording tracks TRa and TRb formed by their own first and second magnetic heads 1A and 1B at the time of recording.

The block sync signals SYNC of the recording signal recorded as distributed four channel digital signals on the respective tracks TRa, TRb, TRc and TRd, are recorded with a definite phase difference provided as the whole recording tracks TR consisting of the four channels. Therefore, the block sync signals SYNC recorded in the individual recording tracks TRa, TRb, TRc and TRd are in phase when and only when the first to fourth magnetic heads 1A to 1D correspond to the respective recording tracks TRa to TRd at the time of the playback. Consider the case where the first magnetic head 1a is made to correspond to the recording track TRc formed by the third magnetic head 1C having the same azimuth angle as the first, the second magnetic head 1B is made to correspond to the recording track TRd formed by the fourth magnetic head 1D having the same azimuth angle as the second, the third magnetic head 1C is made to correspond to the recording track TRa formed by the first magnetic head 1A having the same azimuth angle as the third, and the fourth magnetic head 1D is made to correspond to the recording track TRb formed by the second magnetic head 1B having the same azimuth angle as the fourth. If the feedback loop of the tracking control circuit 50 (Figure 10) is adjusted such that the phase differences of the block sync signals SYNC of the individual channels at the time of the playback coincide as those at the time of the recording, only when the first magnetic head 1A corresponds to the track TRa formed by itself and the second magnetic head 1B corresponds to the recording head TRb formed by itself, a definite track shift results in the aforementioned state since the phase differences between the block sync signals SYNC for the four channels differ at the time of the recording and at the time of the playback. Therefore, a stable condition appears, to lock the tracking control.

For the phase difference of the block sync signals SYNC for the individual phases at the time of recording and at the time of playback to coincide, it is necessary to make, for example, the phase differences between the block sync signal of the recording track TRa formed by the magnetic head 1A and the block sync signal of the recording track TRb formed by the second magnetic head 1B, and the phase difference between the block sync signal of the recording track TRc formed by the third magnetic head 1c and the block sync signal formed by the recording track TRd formed by the fourth magnetic head 1D substantially coincide with each other. It is also necessary to make equal the distance $l_1$ between the magnetic gaps $g_1$ and $g_2$ of the first and second magnetic heads 1A and 1B, and the distance $l_2$ of the magnetic gaps $g_1$ and $g_2$ of the third and fourth magnetic heads 1C and 1D at the time of recording (see Figure 3).

However, although the phase difference relation of the block sync signals of the individual recording tracks TRa, TRb, TRc and TRd may be achieved by electrical processing, it is difficult from the standpoint of the construction of the rotary magnetic head assembly 5, and due to the required fine mechanical precision, to realise the aforementioned relation of the magnetic gaps $g_1$, $g_2$, $g_3$ and $g_4$ of the magnetic heads 1A, 1B, 1C and 1D.

The requirement can be achieved if it is arranged that the phase differences of the block sync signals SYNC for the individual channels at the time of recording and at the time of playback coincide, and a stable condition of tracking coctrol is obtained only when the first magnetic head 1A corresponds to the recording track TRa formed by itself and the second magnetic head 1B corresponds to the recording track TRb formed by itself at the time of playback.

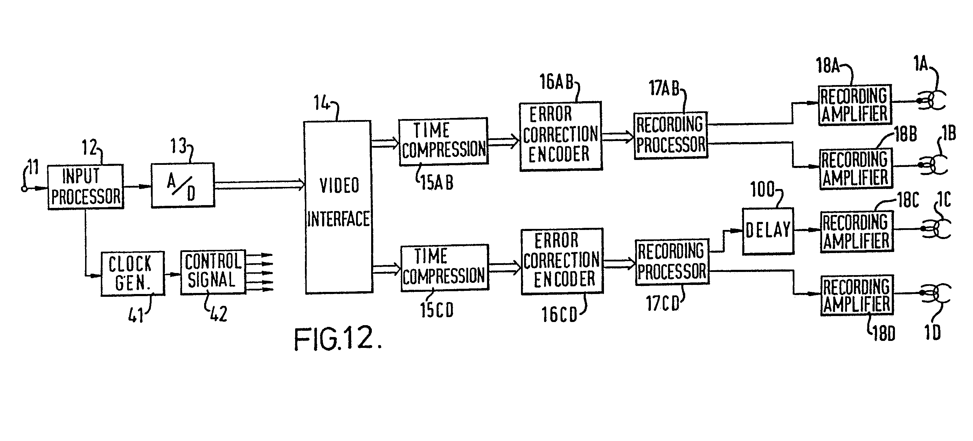

To attain this objective, the phase difference $\theta_1$ between the block sync signals $SYNC_1$ and $SYNC_2$ recorded in the first and second recording tracks TRa and TRb by the first and second magnetic heads 1A and 1B adjacent to each other, and the phase difference $\theta_2$ of the block sync signals $SYNC_3$ and $SYNC_4$ recorded in the third and fourth recording tracks TRc and TRd by the third and fourth magnetic heads 1C and 1D adjacent to each other may be made to differ by 1 to 2 microseconds. Thus, if the block signals $SYNC_1$ and $SYNC_2$ of the first and second recording tracks TRa and TRb are in phase, the block sync signals $SYNC_3$ and $SYNC_4$ recorded in the third and fourth recording tracks TRc and TRd may be made such that their phase difference is 1 to 2 microseconds. More particularly, a delay circuit 100 shown in the block diagram of Figure 12 is provided between the recording processor 17CD and the recording amplifier 18C for the third magnetic head 1C in the recording system of the construction shown in Figure 5. On the serial digital signals including block sync signals SYNC that are separately provided for the individual channels from the recording processors 17AB and 17CD for supply to the magnetic heads 1A, 1B, 1C and 1D, the signal that is to be supplied to the recording amplifier 18C corresponding to the third magnetic head 1C is delayed behind the other signals by the delay circuit 100 by 1 to 2 microseconds.

With this construction of the recording system, only when the recording tracks TRa and TRb that have been formed by the first and second magnetic heads 1A and 1B at the time of recording are reproduced by the same first and second magnetic heads 1A and 1B in contact with the magnetic tape 2 at positions thereof corresponding to the first and second recording tracks TRa and TRb, is the hold voltage $V_h$ provided from the sample/hold circuit 56 of the tracking control circuit 50 according to the phase difference between the reproduced block sync signals $SYNC_1$ and $SYNC_2$ obtained from the magnetic heads 1A and 1B.

More particularly, the first and second magnetic heads 1A and 1B reproduce the first and second recording tracks TRa and TRb corresponding to them, and the reproduced block sync signals $SYNC_1$ and $SYNC_2$ from the magnetic heads 1A and 1B are fed to the input terminals 51A and 51B of the tracking control circuit 50. The block sync signals $SYNC_1$ and $SYNC_2$ fed to the input terminals 51A and 51B are coupled to the monostable multivibrator 52 and the delay circuit 53 respectively. The monostable multivibrator 52 is thus triggered by the leading edge of the block sync signal SYNC to produce a pulse signal of a predetermined duration T. This pulse signal is coupled to the trapezoidal wave generator 54 and the AND gate 55. The AND gate 55 is gate controlled by the pulse signal from the monostable multivibrator 52 to pass the block sync signal SYNC from the delay circuit 53 to the sample/hold circuit 56. The trapezoidal wave generator 54 generates a trapezoidal signal, which rises in synchronism with the leading edge of the pulse signal from the monostable multivibrator 52. This trapezoidal signal is supplied to the sample/hold circuit 56. The sample/hold circuit 56 samples and holds the leading edge ramp voltage of the trapezoidal signal in dependence on the output signal of the AND gate 55 and supplies the hold voltage $V_h$ to the bimorph drive circuit 57 in dependence on the phase difference between the block sync signals $SYNC_1$ and $SYNC_2$.

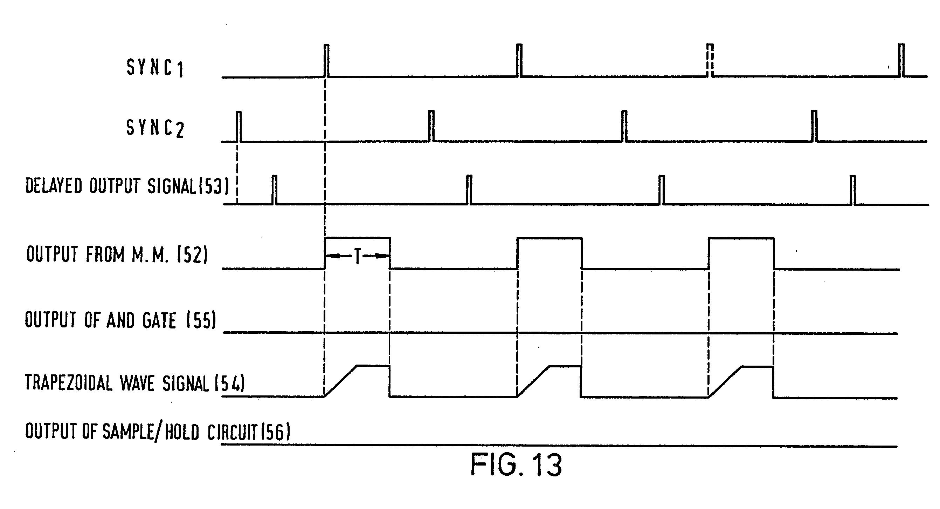

When it occurs that the first magnetic head 1A reproduces the third recording track TRc formed by the third magnetic head 1C, and the second magnetic head 1B reproduces the fourth recording track TRd formed by the fourth magnetic head 1D, the delayed output signal from the delay circuit 53 of the tracking control circuit 50 falls outside the predetermined pulse duration T of the pulse signal from the monostable multivibrator 52 as shown in Figure 13, because the reproduced block sync signal from the first magnetic head 1A is delayed by 1 to 2 microseconds after the reproduced block sync signal from the second magnetic head 1B. Thus, no output signal can be obtained from the AND gate 55, that is, the leading edge ramp voltage of the trapezoidal signal developed by the trapezoidal wave generator 54 cannot be sampled and held in dependence on the leading edge of the pulse signal from the monostable multivibrator 52, so that no hold voltage corresponding to the phase difference between the block sync signals $SYNC_1$ and $SYNC_2$ can be supplied. Thus, when the first magnetic head 1A traces the third recording track TRc and the second magnetic head 1B traces the fourth recording track TRd, no stable condition is generated, even if the magnetic gaps $g_1$ and $g_2$ of the first and second magnetic heads 1A and 1B are the same as the magnetic gaps $g_3$ and $g_4$ of the third and fourth magnetic heads 1C and 1D. The stable condition is only obtained to attain the tracking control when the first and second magnetic heads 1A and 1B trace the respective first and second recording tracks TRa and TRb.

While in the above embodiment the four magnetic heads have been mounted on the bimorph plate so that they can be biased in a direction normal to the scanning direction for tracking control in dependence on the phase signal, even with a digital VTR which does not use a bimorph plate but instead has capstan servo control, the phase signal mentioned above may be used to control the capstan motor.

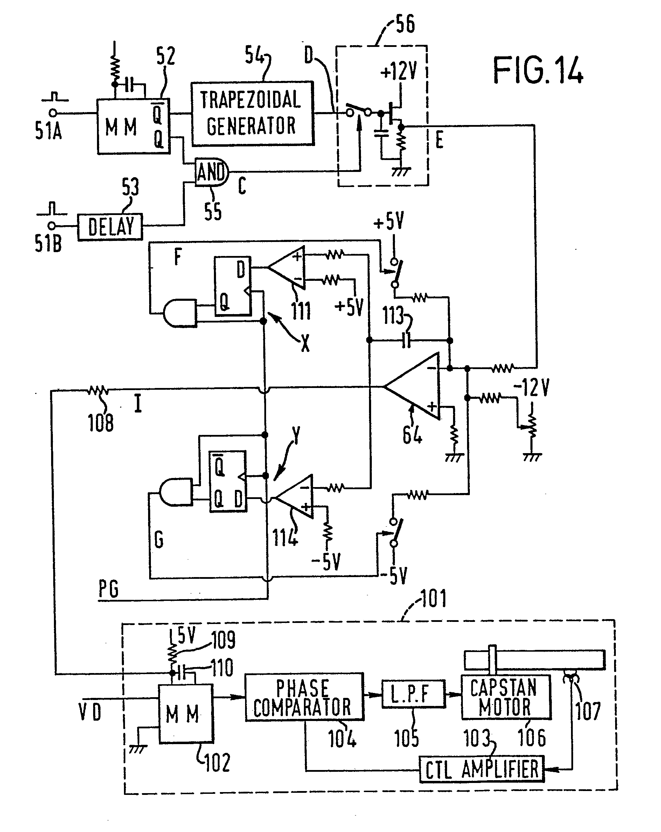

Now, a modified embodiment of the invention applied to a capstan servo control system shown in Figure 14 will be described.

In the following description, parts like those in Figure 10 are indicated by the same reference numerals.

Enclosed within a dashed line rectangle is a conventional capstan servo circuit 101, which includes a monostable multivibrator 102 to which the vertial synchronization signal VD obtained from the reproduced signal is supplied, a CTL amplifier 103 for amplifying the reproduced control signal from a CTL head 107 and a phase comparator 104 for comparing the phase of the output of the CTL amplifier 103 and the phase of the output of the monostable multivibrator 102. The output of the phase comparator 104 is supplied through a low-pass filter 105 to a capstan motor 106 for controlling the rotation thereof. The phase comparator 104, although not shown in detail, has the same construction as the combination of the previously described trapezoidal-wave-forming circuit 54 and a sample/hold circuit 56.

A control voltage generated from an integrating circuit 64 is supplied through a resistor 108 shown in Figure 14 to the junction between a resistor 109 and a capacitor 110 which determine the time constant of the monostable multivibrator 102. Thus, the capstan servo circuit 101 controls the tape position by adding a signal corresponding to the average tracking error between the two magnetic heads to the phase difference between the CTL signal and the reproduced vertical synchronization signal VD. Thus, it is possible to obtain steady tracking even in cases where errors cannot be followed up with an ordinary capstan servo. Particularly where signals are recorded as digital signals, this arrangement, which effects an average control results in low S/N ratio.

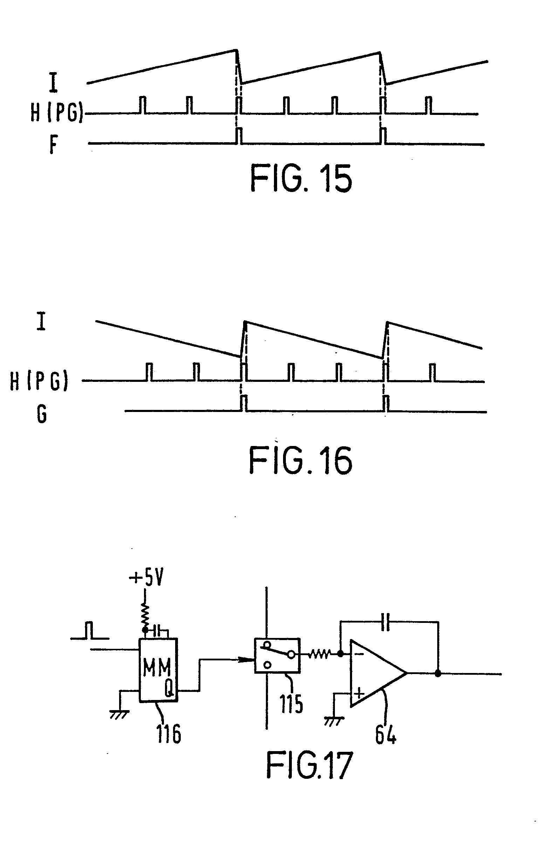

With this tracking control circuit, if track deviation takes place at a reduced or increased tape speed so that the block synchronization signal can no longer be reproduced, the output of the integrating circuit 64 is held at the plus or minus maximum value. In such a case, the tracking can no longer be effected even after the normal tape speed is subsequently recovered. Accordingly, X and Y circuits are provided in the circuit of Figure 14, so that when the integrator output I has a positive slope, the X circuit is used to let an operational amplifier 111 detect a voltage above +5 V as shown in Figure 15, for discharging a capacitor 113 of the integrating circuit 64 in synchronism with the pulse output of the pulse generator detecting the rotation of the rotary magnetic head assembly 5. On the other hand, when the integrator output I has a negative slope, the Y circuit is used to let an operational amplifier 114 detect a voltage below −5 V for discharging the capacitor 113 in synchronism with the pulse generator output pulse. With this arrangement, the output of the integrating circuit 64 will not assume an extreme value, so that tracking can readily be effected when it becomes possible to reproduce the block synchronization signals.

In this tracking control circuit, when the block synchronization signal is not reproduced, the slope of the output of the integrating circuit 64 is determined by the output of the sample/hold circuit 56. In this case, therefore, the time until tracking locks in after the normal speed is recovered is likely to be extended. A circuit shown in Figure 17 prevents such an extension of time. In this circuit, a selection switch 115 is provided between the sample/hold circuit 56 and the integrating circuit 64 and is controlled by a monostable multivibrator 116. The block synchronization signal $SYNC_1$ or $SYNC_2$ or delayed output signal as shown in Figure 11 is supplied to the monostable multivibrator 116. Thus, when the block synchronization signal is reproduced, the quotient output Q of the monostable multivibrator 116 rises to cause the selection switch 115 to supply the output of the sample/hold circuit to the integrating circuit 64. When the block synchronization signal is not reproduced, a constant voltage is supplied through the selection switch 115 to the integrating circuit 64. Thus, a constant slope is always achieved, so that when the constant speed is recovered, the servo can be immediately applied.

By selecting the time constant of the monostable multivibrator 116 to be high enough to correspond to several block synchronization signals, the selection switch 115 can be held without being switched to the constant voltage side even if the guard band is partly scanned by the rotary head assembly.

While either the block synchronization signal $SYNC_1$ or $SYNC_2$ or a delayed output is supplied to the monostable multivibrator 116, it is advantageous to select the delayed output for it always corresponds to the sample/hold signal produced.

As has been described, therefore, two adjacent recording tracks of at least four channel recording tracks are formed with different azimuth angles and a delayed signal with respect to the signal recorded in one of the recording tracks is recorded in an adjacent recording track, thereby permitting tracking control absolutely according to the phase difference between the signals reproduced from two adjacent recording tracks by two magnetic heads. Thus, even in the case where a recording signal such as a video signal is simultaneously multi-channel, for example at least four-channel, recorded, by merely effecting tracking control according to the phase difference between reproduced signals obtained from two magnetic heads corresponding to two predetermined recording tracks, the other magnetic heads are also controlled always to trace the corresponding recording tracks. More particularly, even with a rotary magnetic head assembly, which has four or more magnetic heads arranged such that alternate magnetic heads have different azimuth angles, tracking control in which all the four or more magnetic heads trace the respectively corresponding recording tracks can be achieved.

## Claims

1. A tracking control arrangement in a magnetic recording an reproducing device of the type effecting simultaneous recording and then simultaneous reproduction of at least four channel recording tracks (TRa, TRb, TRc, TRd) formed on a magnetic recording medium (2), said arrangement effecting tracking control by detecting tracking error in dependence on the phase difference between reproduced signals from two adjacent recording tracks (e.g. TRa, TRb) of said at least four channel recording tracks at the time of reproduction, said adjacent two recording tracks (e.g. TRa, TRb) of said at least four channel recording tracks being recorded with different azimuth angles, characterised in that said arrangement includes delay means (100, Fig. 12) which introduce a predetermined delay between the signals recorded in two adjacent tracks (TRc, TRd) of said at least 4 channel recording tracks, said delay having a magnitude such that said tracking control is effected according to the phase difference between the reproduced signals produced when two adjacent magnetic heads (e.g. 1A, 1B) reproduce two adjacent recording tracks (e.g. TRa, TRb) which were recorded by those same two magnetic heads.

2. An arrangement according to claim 1 comprising an analog-to-digital converter (13) for digitizing an input video signal, means (14) for splitting the digitized video signal on a time multiplex basis into four channels for recording on a magnetic tape (2) forming said recording medium by first, second, third and fourth recording heads (1A, 1B, 1C, 1D) respectively, said first and third heads (1A, 1C) having transducer gaps with the same first azimuth angle and said second and fourth heads (1B, 1D) having transducer gaps with the same second azimuth angle different from said first azimuth angle, and a delay circuit (100) in the signal path between said signal splitting means (14) and said third head (1C).

3. An arrangement according to claim 2 wherein said splitting means (14) supplies first and second channel signals over a common first signal path (15AB, 16AB) to a first recording processor (17AB) which supplies said first and second channel signals over respective separate signal paths to said first and second heads (1A, 1B), and said signal splitting means (14) supplies third and fourth channel signals over a common second signal path (15CD, 16CD) to a second recording processor (17CD) which supplies said third and fourth channel signals over respective signal paths to said third and fourth heads (1C, 1D), said respective signal path to said third head (16) including said delay circuit (100).

4. An arrangement according to claim 2 or claim 3 wherein said first to fourth heads (1A, 1B, 1C and 1D) are mounted on a common rotary magnetic head assembly (5).

5. An arrangement according to claim 4 wherein said tracking control is effected by application of control signal to bimorph plates (3A, 3B) on which said first to fourth heads (1A, 1B, 1C, 1D) are mounted.

6. An arrangement according to claim 4 wherein said tracking control is effected by servo control of a capstan motor (106) driving said magnetic tape (2).

## Patentansprüche

1. Anordnung zur Steuerung der Spurlage in einer magnetischen Aufzeichnungs- und Wiedergabeeinrichtung, die von der Art ist, daß das gleichzeitige Aufzeichnen und sodann das gleichzeitige Wiedergeben von zumindest vier Kanalaufzeichnungsspuren (TRa, TRb, TRc, TRd) erfolgt, die auf einem magnetischen Aufzeichnungsträger (2) gebildet sind,

wobei die Steuerung der Spurlage dadurch vorgenommen wird, daß ein Spurlagefehler in Abhängigkeit von der Phasendifferenz zwischen den wiedergegebenen Signalen aus zwei benachbarten Aufzeichnungsspuren (z.B. TRa, TRb) der zumindest vier Kanalaufzeichnungsspuren zum Zeitpunkt der Wiedergabe ermittelt wird,

und wobei die beiden benachbarten Aufzeichnungsspuren (z.B. TRa, TRb) der zumindest vier Kanalaufzeichnungsspuren mit unterschiedlichen Azimuthwinkeln aufgezeichnet, sind, dadurch gekennzeichnet, daß eine Verzögerungseinrichtung (100, Fig. 12) vorgesehen ist, die zwischen die in den beiden benachbarten Spuren (TRc, TRd) der zumindest vier Kanalaufzeichnungsspuren aufgezeichneten Signale eine bestimmte Verzögerung einführt, welche eine solche Größe aufweist, daß die Steuerung der Spurlage in Übereinstimmung mit der Phasendifferenz zwischen den Wiedergabesignalen erfolgt, die in dem Fall wiedergegeben werden, daß zwei benachbarte Magnetköpfe (z.B. 1A, 1B) zwei benachbarte Aufzeichnungsspuren (z.B. TRa, TRb) wiedergeben, die durch dieselben beiden Magnetköpfe aufgezeichnet worden sind.

2. Anordnung nach Anspruch 1 mit einem Analog-Digital-Wandler (13) für eine Digitalisierung eines Eingangs-Videosignals, mit einer Einrichtung (14) zum Aufteilen des digitalisierten Video-Signals auf einer Zeitmultiplexbasis in vier Kanäle zum Aufzeichnen auf einem der Aufzeichnungsträger bildenden Magnetband (2) mittels erster, zweiter, dritter bzw. vierter Aufzeichnungsköpfe (1A, 1B, 1C, 1D), wobei der erste und der dritte Kopf (1A, 1C) Wandler-Spalten mit demselben ersten Azimuthwinkel aufweisen und wobei der zweite und vierte Kopf (1B, 1D) Wandler-Spalten mit demselben zweiten Azimuthwinkel aufweisen, der von dem genannten ersten Azimuthwinkel verschieden ist,

und mit einer Verzögerungsschaltung (100) in dem Signalweg zwischen der Signalaufteilungseinrichtung (14) und dem dritten Kopf (1C).

3. Anordnung nach Anspruch 2, wobei die Signalaufteilungseinrichtung (14) die ersten und zweiten Kanalsignale über einen gemeinsamen ersten Signalweg (15AB, 16AB) an einen ersten Aufzeichnungsprozessor (17AB) abgibt, der die ersten und zweiten Kanalsignale über gesonderte Signalwege an den ersten bzw. zweiten Kopf (1A, 1B) abgibt,

und wobei die Signalaufteilungseinrichtung (14) dritte
und vierte Kanalsignale über einen gemeinsamen zweiten Signalweg (15CD, 16CD) an einen zweiten Aufzeichnungsprozessor (17CD) abgibt, der die dritten und vierten Kanalsignale über entsprechende Signalwege an den dritten bzw. vierten Kopf (1C, 1D) abgibt, wobei der Signalweg zu dem dritten Kopf (16) hin die Verzögerungsschaltung (100) aufweist.

4. Anordnung nach Anspruch 2 oder 3, wobei der erste bis vierte Kopf (1A, 1B, 1C und 1D) auf einer gemeinsamen rotierenden Magnetkopfanordnung (5) angeordnet sind.

5. Anordnung nach Anspruch 4, wobei die Spulagesteuerung dadurch bewirkt wird, daß ein Steuersignal an Zweielementplatten (3A, 3B) abgegeben wird, auf denen die ersten bis vierten Köpfe (1A, 1B, 1C, 1D) angeordnet sind.

6. Anordnung nach Anspruch 4, wobei die Spurlagesteuerung durch eine Servosteuerung eines das Magnetband (2) antreibenden Bandantriebsmotors (106) bewirkt wird.

**Revendications**

1. Dispositif de commande d'alignement dans un dispositif d'enregistrement et de reproduction magnétique du type effectuant un enregistrement simultané puis une reproduction simultanée de pistes d'enregistrement d'au moins quatre canaux (TRa, TRb, TRc, TRd) formées sur un support d'enregistrement (2), ledit dispositif effectuant une commande d'alignement en détectant une erreur d'alignement en fonction de la différence de phase entre des signaux reproduits à partir de deux pistes d'enregistrement voisines (p.e. TRa, TRb) desdites pistes d'enregistrement d'au moins quatre canaux au moment de la reproduction, lesdites deux pistes d'enregistrement (p.e. TRa, TRb) desdites pistes d'enregistrement d'au moins quatre canaux étant enregistrées avec des angles d'azimut différents, caractérisé en ce que ledit dispositif comporte un circuit à retard (100, Figure 12) qui introduit un retard prédéterminé entre les signaux enregistrés dans deux pistes voisines (TRc, TRd) desdites pistes d'enregistrement d'au moins quatre canaux, ledit retard ayant une valeur telle que ladite commande d'alignement soit effectuée en fonction de la différence de phase entre les signaux reproduits quand deux têtes magnétiques voisines (p.e. 1A, 1B) reproduisent deux pistes d'enregistrement voisines (p.e. TRa, TRb) qui ont été enregistrées par lesdites mêmes deux têtes magnétiques.

2. Dispositif selon la revendication 1, comprenant un convertisseur analogique-numérique (13) pour numériser un signal vidéo d'entrée, un dispositif (14) pour séparer le signal vidéo numérisé sur une base de multiplexage temporelle en quatre canaux pour l'enregistrement sur une bande magnétique (2) formant ledit support d'enregistrement, par une première, une seconde, une troisième et une quatrième têtes d'enregistrement (1A, 1B, 1C, 1D) respectivement, ladite première et ladite troisième avec le même premier angle d'azimut et ladite seconde et ladite quatrième têtes (1B, 1D) ayant des entrefers de transducteurs avec le même second angle d'azimut différent dudit premier angle d'azimut, et un circuit à retard (100) dans le circuit de signaux entre ledit dispositif (14) de séparation de signaux et ladite troisième tête (1C).

3. Dispositif selon la revendication 2, dans lequel ledit dispositid (14) de séparation de signaux délivre le premier et le second signaux de canaux sur un premier circuit commun de signaux (15AB, 16AB) vers un premier processeur d'enregistrement (17AB) qui délivre le premier et le second signaux de canaux sur des circuits de signaux séparés respectifs, vers lesdites première et seconde têtes (1A, 1B), et ledit dispositif (14) de séparation de signaux délivrant des signaux du 3ème et du 4ème canaux sur un second circuit commun de signaux (15CD, 16CD) vers un second processeur d'enregistrement (17CD) qui délivre les signaux du 3ème et du 4ème canaux sur des circuits de signaux respectifs vers la troisième et la quatrième têtes (1C, 1D) ledit circuit de signaux respectifs vers ladite troisième tête (16) comprenant ledit circuit à retard (100).

4. Dispositif selon la revendication 2 ou 3, dans lequel lesdites première à quatrième têtes (1A, 1B, 1C et 1D) sont montées sur un ensemble commun (5) de têtes magnétiques tournantes.

5. Dispositif selon la revendication 4, dans lequel ladite commande d'alignement est affectuée par l'application d'un signal de commande à des plaques bimorphes (3A, 3B) sur lesquelles sont montées lesdites première à quatrième têtes (1A, 1B, 1C, 1D).

6. Dispositif selon la revendication 4, caractérisé en ce que ladite commande d'alignement est effectuée par une commande d'asservissement d'un moteur de cabestan (106) entrainant ladite bande magnétique (2).

FIG. 1

(1A,1B,1C,1D)

5

2

3

FIG. 2

3 { 3A
    3B

4a    4a    4

1D

1A    1B    1C

FIG. 3

$\ell_1$    $\ell_2$

1A  $g_1$   1B  $g_2$   1C  $g_3$   1D  $g_4$

TRa  TRb  TRc  TRd  TRa  TRb  TRc  TRd    TAPE TRANSPORT DIRECTION

HEAD SCAN DIRECTION

FIG. 4

2

TRr

FIG. 5

FIG.6

1 BLOCK

HORIZONTAL PARITY DATA

| B1 | B2 | B3 | B4 | B5 | B6 | B7 | B8 | B9 | B10 | B11 | B12 | B13 | B14 | B15 | B16 | B17 | B18 |
|----|----|----|----|----|----|----|----|----|-----|-----|-----|-----|-----|-----|-----|-----|-----|
| 19 | 20 | 21 | 22 | 23 | 24 | 25 | 26 | 27 | 28 | 29 | 30 | 31 | 32 | 33 | 34 | 35 | 36 |
| 37 | 38 | 39 | 40 | 41 | 42 | 43 | 44 | 45 | 46 | 47 | 48 | 49 | 50 | 51 | 52 | 53 | 54 |

33 BLOCKS  32 BLOCKS

| 541 | 542 | 543 | 544 | 545 | 546 | 547 | 548 | 549 | 550 | 551 | 552 | 553 | 554 | 555 | 556 | 557 | 558 |
| 559 | 560 | 561 | 562 | 563 | 564 | 565 | 566 | 567 | 568 | 569 | 570 | 571 | 572 | 573 | 574 | 575 | 576 |
| 577 | 578 | 579 | 580 | 581 | 582 | 583 | 584 | 585 | 586 | 587 | 588 | 589 | 590 | 591 | 592 | | |

— 16 BLOCKS —

— 18 BLOCKS —

VERTICAL PARITY DATA

FIG. 7

FIG.8

FIG. 9

FIG.10

FIG. 11

SYNC₁: $\text{SYNC}_1$

SYNC₂: $\text{SYNC}_2$

DELAYED OUTPUT SIGNAL (53)

OUTPUT FROM M. M. (52)

OUTPUT OF AND GATE (55)

TRAPEZOIDAL WAVE SIGNAL (54)

OUTPUT OF SAMPLE/HOLD CIRCUIT (56)

0 054 419

FIG.12.

INPUT PROCESSOR 12

A/D 13

CLOCK GEN. 41

CONTROL SIGNAL 42

VIDEO INTERFACE 14

TIME COMPRESSION 15AB

TIME COMPRESSION 15CD

ERROR CORRECTION ENCODER 16AB

ERROR CORRECTION ENCODER 16CD

RECORDING PROCESSOR 17AB

RECORDING PROCESSOR 17CD

DELAY 100

RECORDING AMPLIFIER 18A

RECORDING AMPLIFIER 18B

RECORDING AMPLIFIER 18C

RECORDING AMPLIFIER 18D

1A

1B

1C

1D

SYNC₁

SYNC₂

DELAYED OUTPUT SIGNAL(53)

OUTPUT FROM M.M. (52)

OUTPUT OF AND GATE (55)

TRAPEZOIDAL WAVE SIGNAL (54)

OUTPUT OF SAMPLE/HOLD CIRCUIT (56)

FIG. 13

FIG.14

## FIG. 15

## FIG. 16

## FIG. 17